# EUROPÄISCHE PATENTSCHRIFT

(11) **EP 3 165 081 B1**
(45) Veröffentlichungstag und Bekanntmachung des Hinweises auf die Patenterteilung: **25.12.2024**
(21) Anmeldenummer: 16195750.1
(22) Anmeldetag: 26.10.2016
(51) Int. Cl.: A01G 22/10

(54) **VERFAHREN ZUR BEEINFLUSSEN EINER ZUKÜNFTIGEN BODENTEMPERATUR IN EINEM SPARGELDAMM**
METHOD FOR INFLUENCING A FUTURE SOIL TEMPERATURE IN AN ASPARAGUS DAM
PROCÉDÉ POUR INFLUENCER LA TEMPÉRATURE FUTURE DU SOL DANS UNE BUTTE D'ASPERGES

(30) Priorität: 05.11.2015 DE 102015221743
(43) Veröffentlichungstag der Anmeldung: 10.05.2017
(73) Patentinhaber: Robert Bosch GmbH, 70442 Stuttgart (DE)
(72) Erfinder: Lasarczyk, Christian, 71732 Tamm (DE); Ferhadbegovic, Bojan, 70372 Stuttgart (DE); Penndorf, Timo, 71111 Waldenbuch (DE); Glunk, Christian, 71272 Renningen (DE); Lens, Thomas, 71067 Sindelfingen (DE); Albert, Amos, 71229 Leonberg (DE)

(56) Entgegenhaltungen:
- UNKNOWN: "Mehr Informationen für Landwirte: Sensorlösung für den Spargelanbau von Bosch erhält Auszeichnung", INTERNET CITATION, 9 September 2015 (2015-09-09), XP002768626, Retrieved from the Internet <URL:https://www.deepfield-robotics.com/de/News-Detail_150909.html> [retrieved on 20170323]
- GRAEFE ET AL: "Computergestuetzt die Dammtemperatur und den Spargelertrag vorhersagen", vol. 45, no. 4, 1 April 2009 (2009-04-01), pages 44 - 46, XP008183815, ISSN: 0016-6286, Retrieved from the Internet <URL:https://www.gemuese-online.de/Archiv/PDF-Archiv/Computergestuetzt-die-Dammtemperatur-und-den-Spargelertrag-vorhersagen,QUlEPTk2NzYzOCZNSUQ9MTA5Njk1.html?UID=A0AB5A0BFCF721E6A621C6E77C4F03A2F0F65F21B0452C>
- LEIBNIZ-INSTITUT FÜR GEMÜSE- UND ZIERPFLANZENBAU GROSSBEEREN/ERFURT E.V.: "Spargeldammtemperaturen (Messung und Prognose) für Brandenburg verfügbar", 30 March 2015 (2015-03-30), XP002768409, Retrieved from the Internet <URL:http://www.igzev.de/spargeldammtemperaturen-messung-und-prognose-fuer-brandenburg-verfuegbar/> [retrieved on 20170320]
- GRAEFE ET AL: "Simulation of Soil Heating in Ridges partly covered with Plastic Mulch, Part II: Model Calibration and Validation", BIOSYSTEMS ENGINEERING, ACADEMIC PRESS, UK, vol. 92, no. 4, 4 October 2005 (2005-10-04), pages 495 - 512, XP005152902, ISSN: 1537-5110, DOI: 10.1016/J.BIOSYSTEMSENG.2005.08.001

## Beschreibung

### Stand der Technik

Die Erfindung geht aus von einem Verfahren nach Gattung des unabhängigen Anspruchs.

Beim Spargelanbau kann unter Verwendung von Folien, die auf den Spargeldämmen angeordnet sind, ein früherer Erntezeitpunkt erreicht werden sowie die Temperaturverteilung im Spargeldamm gezielt beeinflusst werden. Die Folien können mit einer schwarzen Seite zur Sonne ausgerichtet werden, um die Sonnenstrahlung in einem hohen Maß zu absorbieren. Ebenso können die Folien mit einer weißen Seite zur Sonne ausgerichtet werden, um die Sonnenstrahlung in einem hohen Maß zu reflektieren, dabei jedoch auch die Spargeldämme vor Wind zu schützen.

Aus dem Artikel: Graefe et al: "Computergestützt die Dammtemperatur und den Spargelertrag vorhersagen", Gemüse: Das Magazin für den Professionellen Gemüseanbau, Dt. Landwirtschaftsverlag, Ulmer, DE Bd. 45, Mr. 4 1, April 2009, Seiten 44 - 46 und Unknown: "Mehr Informationen für Landwirte: Sensorlösung für den Spargelanbau von Bosch erhält Auszeichnung", Internet Citation, 9. September 2015, gefunden im Internet: URL:https://www.deepfield-robotics.com/News-Detail 150909.html sind bereits Verfahren zur Vorhersage der Dammtemperatur bekannt.

### Offenbarung der Erfindung

Es wird ein Verfahren zur Beeinflussung einer zukünftigen Bodentemperatur in einem Spargeldamm vorgestellt, wobei das Verfahren durch die Schritte des Anspruchs 1 definiert ist.

Dieses Verfahren kann beispielsweise in Software oder Hardware oder in einer Mischform aus Software und Hardware beispielsweise in einem Steuergerät implementiert sein.

Unter einem Spargeldamm wird ein Erdwall verstanden, der über einer Pflanzreihe von Spargelpflanzen aufgeschüttet wird, um lange, bleiche oder nahezu farblose Spargeltriebe zu erhalten. Eine Temperatur in dem Spargeldamm wird wesentlich von Umwelteinflüssen beeinflusst. Eine Wettervorhersageinformation beinhaltet eine beispielsweise eine Information über eine geografische und zeitliche Vorhersage dieser Umwelteinflüsse für einen zukünftigen Betrachtungszeitraum. Beispielsweise umfasst die Wettervorhersageinformation einen Temperaturvorhersagewert, einen Windvorhersagewert (beispielsweise Stärke und Richtung), einen Sonnenstundenvorhersagewert und/oder einen Niederschlagsvorhersagewert. Diese Größen können in dem Temperaturmodell des Spargeldamms verarbeitet oder in Zusammenhang gesetzt sein oder werden. Das Temperaturmodell kann dabei auch aus zu vorangegangenen Zeitpunkten ermittelten Temperaturmesswerten bestehen oder unter Verwendung dieser, zu vorangegangenen Zeitpunkten ermittelten Temperaturmesswerte gebildet werden. Um einen Ausgangswert für die erwartete Bodentemperatur zu verwenden, wird eine aktuelle Bodentemperatur und/oder eine Historie der Bodentemperatur im Spargeldamm verwendet.

Der Bodentemperaturwert wird unter Verwendung eines eine Folienausrichtung oder einer Lage der Folie auf dem Spargeldamm repräsentierenden Lagewertes bestimmt. Unter eine Folie kann allgemein ein flächiges flexibles oder biegbares Abdeckelement verstanden werden, mit dessen Hilfe der Spargeldamm gegenüber Umwelteinflüssen geschützt werden kann. Beispielsweise kann die Folie aus einem Kunststoffmaterial hergestellt sein. Der Spargeldamm kann durch eine Kunststofffolie abgedeckt werden, die beispielsweise auf einer ersten Seite weiß ist und auf einer gegenüberliegenden zweiten Seite schwarz ist. Ebenso kann eine weiße Folie oder eine schwarze Folie verwendet werden. Unter der Folienausrichtung kann verstanden werden, welche Seite beziehungsweise welche Farbe der Folie der Sonne zugewandt ist. Die Ausrichtung der Folie beeinflusst beispielsweise die erreichbare Temperatur bzw. die Temperaturentwicklung im Spargeldamm. Unter einer Lage der Folie kann eine Ausrichtung oder ein Überdeckungsgrad der Folie über einen abzudeckenden Bereich des Spargeldamms verstanden werden.

Es wird ein erster Bodentemperaturwert oder Bodentemperaturverlauf für eine exponierte dunkle, insbesondere schwarze Folienseite bestimmt. Ferner wird ein zweiter Bodentemperaturwert oder -verlauf für eine exponierte helle, insbesondere weiße Folienseite bestimmt. Weiterhin wird zumindest ein dritter Bodentemperaturwert oder -verlauf für einen folienlosen Spargeldamm bestimmt. Das Temperaturmodell des Spargeldamms kann Ergebnisse für drei unterschiedliche Zustände ausgeben. Durch die drei unterschiedlichen erwarteten Bodentemperaturwerte oder -verläufe kann die richtige Folienausrichtung für den kommenden Tag beziehungsweise die durch die Wettervorhersageinformation abgedeckte Zukunft ausgewählt werden.

Durch die in den abhängigen Ansprüchen aufgeführten Maßnahmen sind vorteilhafte Weiterbildungen und Verbesserungen des im unabhängigen Anspruch angegebenen Verfahrens möglich.

Das Verfahren kann einen Schritt des Bereitstellens eines Empfehlungswertes aufweisen, wenn der zugehörige Bodentemperaturwert kleiner als ein Schwellenwert ist oder eine Alarmierungsfunktion aktivieren. Dabei kann der Empfehlungswertes eine zu empfehlende Lage und/oder Ausrichtung einer Folie auf dem Spargeldamm repräsentieren. Ein Schwellenwert kann eine für den Wuchs der Spargelpflanzen kritische Temperatur repräsentieren. Bei einer Temperatur oberhalb des Schwellenwerts können Schäden an den Spargelpflanzen auftreten. Durch eine Ausgabe einer Empfehlung bei der Ausrichtung und/oder Lage der Folie können so durch ein Vermeiden von Schäden an den Spargelpflanzen Einbußen bei der Ernte vermieden werden.

Als Bodentemperaturwert kann ein erwarteter Maximalwert der Bodentemperatur bestimmt werden. Durch eine Begrenzung auf einen einzelnen Temperaturwert kann das Temperaturmodell mit geringen Rechenressourcen ausgewertet werden. Für eine Beurteilung von Schädigungen ist letztendlich lediglich der Maximalwert relevant.

Ein erwarteter Bodentemperaturverlauf kann unter Verwendung einer Mehrzahl von Bodentemperaturwerten bestimmt werden, um die zukünftige Bodentemperatur in einem Spargeldamm vorherzusagen. Ein Bodentemperaturverlauf kann zwischen der Mehrzahl von Bodentemperatur werden als Stützpunkte interpoliert werden. Durch den Bodentemperaturverlauf kann die Folienausrichtung oder Lage im Laufe eines Tages geändert werden, um beispielsweise morgens eine schnelle Erhöhung der Bodentemperatur unter Verwendung von schwarzer Folie beziehungsweise der schwarzen Seite zu erreichen und im Laufe des Tages auf weiße Folie beziehungsweise die weiße Seite zu wechseln, um die Bodentemperatur zu begrenzen.

Es kann zumindest ein in dem Spargeldamm erfasster weiterer Temperaturwert eingelesen werden. Der Temperaturwert und der weitere Temperaturwert können Temperaturen in unterschiedlichen Messtiefen im Spargeldamm repräsentieren. Dabei kann ein weiterer erwarteter Bodentemperaturwert unter Verwendung des Temperaturmodells, des weiteren Temperaturwerts und der Wetterinformation bestimmt werden. Durch eine Modellierung mehrerer Temperaturwerte kann eine genauere Temperaturvorhersage getroffen werden.

Gemäß einer weiteren Ausführungsform des hier vorgestellten Ansatzes kann im Schritt des Einlesens zumindest ein in dem Spargeldamm erfasster anderer Temperaturwert eingelesen werden, wobei der Temperaturwert und der andere Temperaturwert Temperaturen zu unterschiedlichen Zeitpunkten im Spargeldamm repräsentieren und im Schritt des Bestimmens der erwartete Bodentemperaturwert unter Verwendung des Temperaturmodells, des Temperaturwerts, des anderen Temperaturwerts und der Wetterinformation bestimmt wird. Eine solche Ausführungsform des hier vorgestellten Ansatzes bietet den Vorteil einer besonders präzisen Bestimmungsmöglichkeit des erwarteten Bodentemperaturwertes, da die vorangegangene zeitliche Entwicklung der Bodentemperatur mitberücksichtigt werden kann.

Der hier vorgestellte Ansatz schafft ferner ein Informationssystem, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Informationssystems kann die der Erfindung zugrunde liegende Aufgabe schnell und effizient gelöst werden.

Hierzu kann das Informationssystem zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Informationssystem kann vorliegend ein elektrisches Gerät verstanden werden, das Sensorsignale verarbeitet und in Abhängigkeit davon Steuer- und/oder Datensignale ausgibt. Das Informationssystem kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Informationssystems beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Besonders günstig kann das Informationssystem im Bereich der Landwirtschaft, insbesondere im Gemüseanbau, speziell im Teilbereich des Spargelanbaus verwendet werden. Hierbei kann durch das Informationssystem, das einem Landwirt eine Information über vorzunehmenden Veränderungen im Bereich seines Spargeldamms gibt, auf diese Weise mit einfachen technischen Hilfsmitteln eine verbesserte Ernte bewirken. Dabei kann das Informationssystem direkt vor Ort auf dem Feld oder angesetzt auf dem Bauernhof installiert sein und die einzulesenden Werte drahtgebunden oder drahtlos empfangen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1 eine Darstellung eines Informationssystems zum Vorhersagen einer zukünftigen Bodentemperatur in einem Spargeldamm gemäß einem Ausführungsbeispiel;
Fig. 2 eine Darstellung einer Temperatursensorvorrichtung in einem Spargeldamm gemäß einem Ausführungsbeispiel;
Fig. 3 ein Blockschaltbild eines Informationssystems zum Vorhersagen einer zukünftigen Bodentemperatur in einem Spargeldamm gemäß einem Ausführungsbeispiel;
Fig. 4 eine Darstellung von vorhergesagten Bodentemperaturen gemäß einem Ausführungsbeispiel; und
Fig. 5 ein Ablaufdiagramm eines Verfahrens zum Vorhersagen einer zukünftigen Bodentemperatur in einem Spargeldamm gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

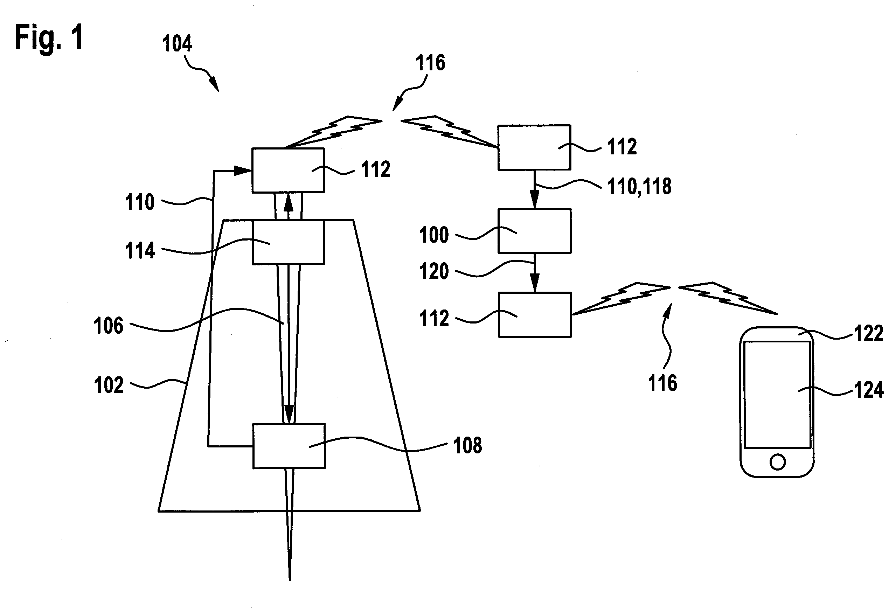

Fig. 1 zeigt eine Darstellung eines Informationssystems 100 zum Vorhersagen einer zukünftigen Bodentemperatur in einem Spargeldamm 102 gemäß einem Ausführungsbeispiel. In den Spargeldamm 102 ist eine Temperatursensorvorrichtung 104 eingesteckt. Die Temperatursensorvorrichtung 104 ist dazu ausgebildet, eine Bodentemperatur zu messen. Dazu weist die Temperatursensorvorrichtung 104 einen Dorn 106 zum Einstecken in den Spargeldamm 102 auf. An dem Dorn 106 ist zumindest ein Temperatursensor 108 angeordnet. Wenn der Dorn 106 in den Spargeldamm 102 eingesteckt ist, befindet sich der Temperatursensor 108 in einer Messtiefe unterhalb einer Oberfläche des Spargeldamms 102. Die Temperatursensorvorrichtung 104 erfasst die Bodentemperatur des Spargeldamms 102. Der Temperatursensor 108 bildet die Bodentemperatur in einem Temperaturwert 110 ab. Der Temperatursensor 108 ist mit einer Kommunikationseinrichtung 112 der Temperatursensorvorrichtung 104 verbunden. Die Kommunikationseinrichtung 112 und der Temperatursensor 108 werden von einer Batterie 114 mit elektrischer Energie versorgt. Die Kommunikationseinrichtung 112 der Temperatursensorvorrichtung 104 ist oberhalb der Oberfläche des Spargeldamms 102 angeordnet. Die Kommunikationseinrichtung 112 ist dazu ausgebildet, eine drahtlose Kommunikation 116 zu einer weiteren Kommunikationseinrichtung 112, die mit dem Informationssystem 100 verbunden ist, aufzubauen. Der Temperaturwert 110 wird unter Verwendung eines Kommunikationsprotokolls von der Kommunikationseinrichtung 112 zu der weiteren Kommunikationseinrichtung 112 übermittelt. Die weitere Kommunikationseinrichtung 112 stellt den Temperaturwert 110 für das Informationssystem 100 bereit. Hier stellt die weitere Kommunikationseinrichtung 112 ferner eine Wettervorhersageinformation 118 für das Informationssystem 100 bereit.

Das Informationssystem 100 ist dazu ausgebildet, unter Verwendung des Temperaturwerts 110, der Wettervorhersageinformation 118 und eines Temperaturmodells des Spargeldamms 102 zumindest einen erwarteten Bodentemperaturwert 120 zu bestimmen. Beispielsweise kann ein erwarteter Maximalwert der Bodentemperatur bestimmt werden.

Der erwartete Bodentemperaturwert 120 wird über eine weitere Kommunikationseinrichtung 112 und eine weitere drahtlose Kommunikation 116 auf ein mobiles Gerät 122 übertragen. Auf dem mobilen Gerät 122 wird der erwartete Bodentemperaturwert 120 als Bodentemperaturvorhersage 124 dargestellt. In Abhängigkeit von der Bodentemperaturvorhersage 124 kann eine Empfehlung bereitgestellt werden, welche Seite einer hier nicht dargestellten Abdeckfolie des Spargeldamms 102 sonnenzugewandt ausgerichtet werden soll.

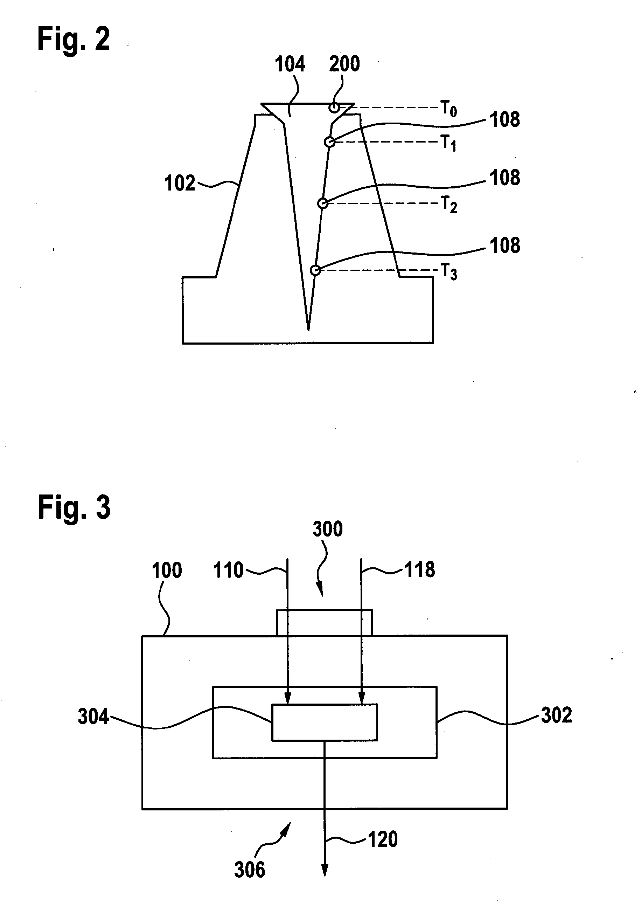

Fig. 2 zeigt eine Darstellung einer Temperatursensorvorrichtung 104 in einem Spargeldamm 102 gemäß einem Ausführungsbeispiel. Die Temperatursensorvorrichtung 104 entspricht im Wesentlichen der Temperatursensorvorrichtung in Fig. 1. Im Gegensatz dazu weist die Temperatursensorvorrichtung 104 drei Bodentemperatursensoren 108 und einen Oberflächentemperatursensor 200 auf. Der Oberflächentemperatursensor 200 ist an der Oberfläche des Spargeldamms 102, jedoch noch im Spargeldamm 102 angeordnet. Die Bodentemperatursensoren 108 sind in unterschiedlichen Tiefen im Spargeldamm 102 angeordnet. Dabei ist ein erster Bodentemperatursensor 108 T1 nahe an der Oberfläche des Spargeldamms 102 angeordnet. Er ist dabei beispielsweise in einer Tiefe von "Null" cm im Erdreich des Spargeldamms 102 angeordnet. Dabei kann er aber unter der Folie sein und der von ihm gelieferte Temperaturwert wird dann teilweise erheblich von der umgebenden Lufttemperatur abweichen.

Ein zweiter Bodentemperatursensor 108 T2 ist im Wesentlichen mittig im Spargeldamm 102 angeordnet. Ein dritter Bodentemperatursensor 108 T3 ist an einem Fuß des Spargeldamms 102 angeordnet. Jeder der drei Bodentemperatursensoren 108 stellt einen Temperaturwert bereit, der über die nicht dargestellte Kommunikationseinrichtung an das Informationssystem gesendet wird. Der Oberflächentemperatursensor 200 stellt ebenfalls einen Temperaturwert bereit, der über die Kommunikationseinrichtung an das Informationssystem gesendet wird.

Mit anderen Worten ist in Fig. 2 eine Temperaturmessung im Spargeldamm 102 mit vier Sensoren T0 bis T3 dargestellt. Die Temperatur im Spargeldamm 102 wird an verschiedenen Stellen 108 unterschiedlicher Tiefe gemessen. Mit einem Temperaturmodell, das Sonneneinstrahlung, Konvektion, Abstrahlung, Windeinfluss und Wärmeleitung im Spargeldamm 102 berücksichtigt, wird unter Berücksichtigung der Wettervorhersage für den nächsten Tag eine Simulation der Temperaturen an den Messstellen 108 im Spargeldamm 102 durchgeführt. Die Benutzerschnittstelle zeigt den berechneten Temperaturverlauf im Spargeldamm in Abhängigkeit von der Folienlage an und stellt die kritischen Temperaturen im Vergleich dar. Folienlagen, die kritische Temperaturen überbeziehungsweise unterschreiten, werden als problematisch markiert.

Fig. 3 zeigt ein Blockschaltbild eines Informationssystems 100 zum Vorhersagen einer zukünftigen Bodentemperatur 120 in einem Spargeldamm gemäß einem Ausführungsbeispiel. Das Informationssystem 100 entspricht im Wesentlichen dem Informationssystem in Fig. 1. das Informationssystem 100 weist eine Schnittstelle 300 zum Einlesen des Temperaturwerts 110 und der Wettervorhersageinformation 118 auf. Das Informationssystem 100 weist eine Einrichtung 302 zum Bestimmen auf, in der unter Verwendung des Temperaturwerts 110 und der Wettervorhersageinformation 118 sowie eines Bodentemperaturmodells 304 der erwartete Bodentemperaturwert 120 bestimmt wird. Der erwartete Bodentemperaturwert 120 wird über eine Schnittstelle 306 zum Bereitstellen bereitgestellt.

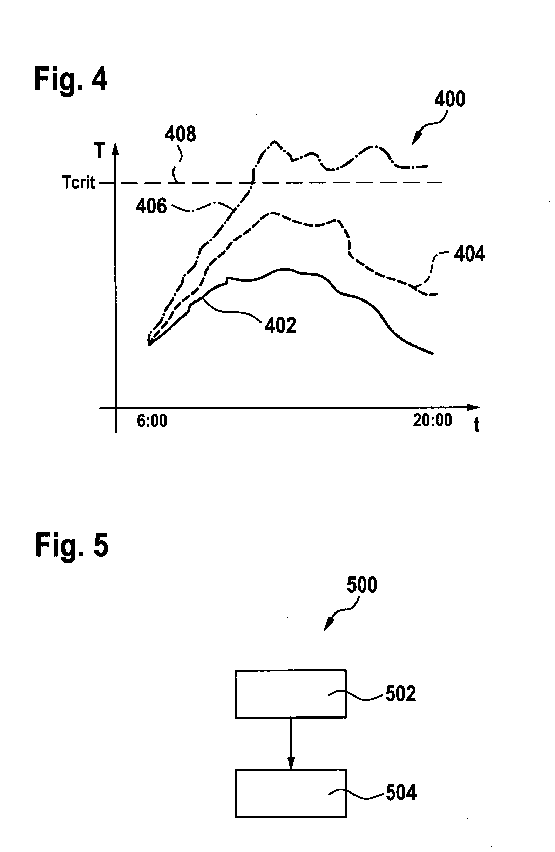

Fig. 4 zeigt eine Darstellung von vorhergesagten Bodentemperaturen 400 gemäß einem Ausführungsbeispiel. Die Bodentemperaturwerte 400 werden von einem Informationssystem, wie es beispielsweise in den Figuren eins und drei dargestellt ist vorhergesagt. Die Bodentemperaturwerte 400 sind in einem Zeit-Temperatur-Diagramm dargestellt, das auf seiner Abszisse die Zeit t und auf seiner Ordinate die Temperatur T aufgetragen hat. Die Zeit t ist über den Verlauf eines kommenden Tages von morgens bis abends aufgetragen. Die Bodentemperaturwerte 400 repräsentieren Vorhersagen für unterschiedliche Folienzustände im Tagesgang. Dabei sind alle Bodentemperaturwerte 400 morgens niedrig und steigen bis zur Mittagszeit an. Dabei repräsentiert ein erster Bodentemperaturwert 402 die erwartete Bodentemperatur ohne Folie, ein zweiter Bodentemperaturwert 404 die erwartete Bodentemperatur mit einer weißen Folie und ein dritter Bodentemperaturwert 406 die erwartete Bodentemperatur mit einer schwarzen Folie.

Bei dem ersten Bodentemperaturwert 402 ohne Folie wird zur Mittagszeit eine Maximaltemperatur vorhergesagt. Am Nachmittag wird die Bodentemperatur demnach bis auf einen Ausgangswert zurückfallen. Bei dem zweiten Bodentemperaturwert 404 mit weißer Folie wird ebenfalls zur Mittagszeit eine Maximaltemperatur vorhergesagt. Am Nachmittag wird die Bodentemperatur abfallen, wird nach der Vorhersage jedoch nicht den Ausgangswert erreichen. Bei dem dritten Bodentemperaturwert 406 mit schwarzer Folie wird ein Anstieg der Bodentemperatur bis zur Mittagszeit vorhergesagt. Bis zum Abend wird ein Verharren auf einem ähnlich hohen Temperaturniveau erwartet.

Zusätzlich ist in dem Diagramm eine kritische Temperatur 408 Tcrit eingezeichnet. Der erste Bodentemperaturwert 402 und der zweite Bodentemperaturwert 404 werden diese kritische Temperatur 408 voraussichtlich nicht erreichen. Der dritte Bodentemperaturwert 406 übersteigt die kritische Temperatur 408 voraussichtlich. Es wird erwartet, dass der dritte Bodentemperaturwert 406 bis zum Abend oberhalb der kritischen Temperatur 408 verharrt. Die kritische Temperatur 408 repräsentiert beispielsweise eine Temperatur, bei der Pflanzen beziehungsweise Pflanzenteile im Boden Schaden nehmen können.

Ferner lassen sich die Vorhersagen der Temperaturverläufe für die einzelnen Tiefen darstellen. Außerdem ist es möglich, die Irrtumswahrscheinlichkeit der Vorhersage darzustellen, z. B. mithilfe von Fehlerbalken bzw. Unsicherheitskorridoren. Im Allgemeinen wächst die Vorhersageunsicherheit mit dem Vorhersagehorizont.

In einem Ausführungsbeispiel wird eine Empfehlung über das mobile Gerät ausgegeben, die Folie mit der weißen Seite nach oben zu verwenden, da durch die weiße Folie am kommenden Tag voraussichtlich die günstigsten Wachstumsbedingungen erreicht werden.

Es wird eine Vorhersage 400 des Temperaturverlaufs im Spargeldamm auf der Grundlage der Temperaturmessung und der Wettervorhersage vorgestellt.

In Fig. 4 ist eine Temperaturvorhersage 400 für eine Messstelle an einem der in Fig. 2 dargestellten Sensoren (Sensor Ti) in Abhängigkeit der Folienlage dargestellt. Die Vorhersage 406 zeigt ein Überschreiten der kritischen Temperatur 408 an für den Fall, dass die schwarze Seite der Folie verwendet wird.

Wenn die Temperatur im Spargeldamm in einem optimalen Bereich liegt, können optimale Wachstumsbedingungen beim Anbau von Spargel erreicht werden. Die Temperatur soll eine kritische Temperatur nicht überschreiten, um die Pflanze nicht zu schädigen, sollte aber hoch genug sein, um ein optimales Wachstum zu ermöglichen. Zudem sollen die Temperaturunterschiede zwischen verschiedenen Erdschichten gewisse Grenzwerte nicht überschreiten.

Eine Entscheidung für die Folienlage für den Folgetag kann unter Verwendung der Abendtemperatur im Spargeldamm getroffen werden. Der hier vorgestellte Ansatz unterstützt diese Entscheidung technisch.

Die modellgestützte Temperaturvorhersage 400 im Spargeldamm ermöglicht eine fundierte Entscheidung bezüglich der optimalen Folienlage durch den Landwirt. Die Entscheidung wird dem Landwirt überlassen, er wird dabei bestmöglich unterstützt.

Denkbar ist weiterhin eine Ausführungsform des hier vorgestellten Ansatzes, bei der eine Sensorlanze als Temperatursensorträger mit typischerweise mehreren Sensoren bestückt ist, die die Temperaturen in definierten Tiefen messen. Hierbei kann eine Datenerfassung der von den Temperatursensoren in einem Mikrocontroller erfolgen, der beispielsweise durch eine Batterie, einen Akku oder solar betrieben wird). Eine Übertragung der Daten der Temperatursensoren in eine Cloud (beispielsweise auf einen Server) oder zumindest an ein Gateway im Feld kann dann erfolgen, wobei das Gateway dann ebenfalls die Übertragung in die Cloud vornehmen kann. Anschließend kann eine Berechnung der Vorhersage in der Cloud erfolgen, d. h. auf dem Server (oder auch auf dem Mikrocontroller selbst) und eine Übertragung an das Endgerät des Landwirts vorgenommen werden. Dort kann dann eine Visualisierung der Vorhersage bzw. Interaktion mit dem Nutzen (Vorhersage bei Verwendung dunkler/schwarzer Folie, heller/weißer Folie, ...) ausgegeben werden.

Denkbar ist ferner auch, dass das Modell selbstlernend ausgestaltet werden kann und sich mit zunehmender Einsatzzeit verbessert (z. B. durch Vergleich von Messungen mit Vorhersagewerten). Dadurch verringert sich über der Zeit der Vorhersagefehler. Zusätzlich oder alternativ könnte die Darstellung des auf einer App wird einem Smartphone, einem Tablet, oder dergleichen erfolgen, die Berechnung bzw. Ermittlung des erwarteten Bodentemperaturwerts in der Cloud erfolgen.

Fig. 5 zeigt ein Ablaufdiagramm eines Verfahrens 500 zum Vorhersagen einer zukünftigen Bodentemperatur in einem Spargeldamm gemäß einem Ausführungsbeispiel. Das Verfahren 500 weist einen Schritt 502 des Einlesens und einen Schritt 504 des Bestimmens auf. Im Schritt 502 des Einlesens wird ein Bodentemperaturwert eingelesen, der in dem Spargeldamm erfasst worden ist. Weiterhin wird in dem Schritt 502 des Einlesens eine Wettervorhersageinformation eingelesen. Im Schritt 504 des Bestimmens wird unter Verwendung eines Temperaturmodells des Spargeldamms, des Temperaturwerts und/oder eines zeitlichen Verlaufs des Temperaturwerts und der Wettervorhersageinformation ein erwarteter Bodentemperaturwert bestimmt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (500) zur Beeinflussung einer zukünftigen Bodentemperatur in einem Spargeldamm (102), wobei das Verfahren (500) die folgenden Schritte aufweist:
Einlesen (502) zumindest eines in dem Spargeldamm (102) erfassten Temperaturwerts (110) und einer Wettervorhersageinformation (118); und
Bestimmen (504) eines erwarteten Bodentemperaturwerts (120) unter Verwendung eines Temperaturmodells (304) des Spargeldamms (102), des Temperaturwerts (110) und/oder eines zeitlichen Verlaufs des Temperaturwerts (110) und der Wettervorhersageinformation (118), um die zukünftige Bodentemperatur in einem Spargeldamm (102) vorherzusagen, wobei bei dem im Schritt (504) des Bestimmens der Bodentemperaturwert (110) ferner unter Verwendung eines eine Folienausrichtung oder eine Lage der Folie auf dem Spargeldamm (102) repräsentierenden Lagewertes bestimmt wird, wobei bei dem im Schritt (504) des Bestimmens ein erster Bodentemperaturwert (120) für eine exponierte dunkle, insbesondere schwarze Folienseite, ein zweiter Bodentemperaturwert (120) für eine exponierte helle, insbesondere weiße Folienseite und/oder zumindest ein dritter Bodentemperaturwert (120) für einen folienlosen Spargeldamm (102) bestimmt wird, und
Auswahl der richtigen Folienausrichtung oder Lage der Folie, um eine zukünftig Temperatur im Spargeldamm in einem optimalen Bereich für optimale Wachstumsbedingungen beim Anbau von Spargel zu erreichen.

2. Verfahren (500) gemäß Anspruch 1, mit einem Schritt des Bereitstellens eines Empfehlungswertes, bereitgestellt wird, wenn der zugehörige Bodentemperaturwert (120) kleiner als ein Schwellenwert (408) ist, wobei der Empfehlungswertes eine zu empfehlende Lage und/oder Ausrichtung einer Folie auf dem Spargeldamm (102) repräsentiert.

3. Verfahren (500) gemäß einem der vorangegangenen Ansprüche, bei dem im Schritt (404) des Bestimmens als Bodentemperaturwert (120) ein erwarteter Maximalwert der Bodentemperatur bestimmt wird.

4. Verfahren (500) gemäß einem der vorangegangenen Ansprüche, bei dem im Schritt (504) des Bestimmens ein erwarteter Bodentemperaturverlauf (400) unter Verwendung einer Mehrzahl von Bodentemperaturwerten (120) bestimmt wird, um die zukünftige Bodentemperatur in einem Spargeldamm (102) vorherzusagen.

5. Verfahren (500) gemäß einem der vorangegangenen Ansprüche, bei dem im Schritt (502) des Einlesens zumindest ein in dem Spargeldamm (102) erfasster weiterer Temperaturwert eingelesen wird, wobei der Temperaturwert und der weitere Temperaturwert Temperaturen in unterschiedlichen Messtiefen im Spargeldamm (102) repräsentieren und im Schritt des Bestimmens (504) ein weiterer erwarteter Bodentemperaturwert unter Verwendung des Temperaturmodells (304), des weiteren Temperaturwerts und der Wetterinformation (118) bestimmt wird.

6. Verfahren (500) gemäß einem der vorangegangenen Ansprüche, bei dem im Schritt (502) des Einlesens zumindest ein in dem Spargeldamm (102) erfasster anderer Temperaturwert eingelesen wird, wobei der Temperaturwert und der andere Temperaturwert Temperaturen zu unterschiedlichen Zeitpunkten im Spargeldamm (102) repräsentieren und im Schritt des Bestimmens (504) der erwartete Bodentemperaturwert unter Verwendung des Temperaturmodells (304), des Temperaturwerts, des anderen Temperaturwerts und der Wetterinformation (118) bestimmt wird.

## Claims

1. Method (500) for influencing a future soil temperature in an asparagus dam (102), wherein the method (500) comprises the following steps:
reading in (502) at least one temperature value (110) captured in the asparagus dam (102) and weather forecast information (118); and
determining (504) an expected soil temperature value (120) using a temperature model (304) of the asparagus dam (102), the temperature value (110) and/or a temporal profile of the temperature value (110) and the weather forecast information (118) in order to predict the future soil temperature in an asparagus dam (102), wherein, in the step (504) of determining, the soil temperature value (110) is furthermore determined using a position value representing a film orientation or a position of the film on the asparagus dam (102), wherein, in the step (504) of determining, a first soil temperature value (120) is determined for an exposed dark, in particular black, film side, a second soil temperature value (120) for an exposed bright, in particular white, film side and/or at least a third soil temperature value (120) for a filmless asparagus dam (102), and
selecting the correct film orientation or position of the film in order to achieve a future temperature in the asparagus dam in an optimum range for optimum growth conditions in the cultivation of asparagus.

2. Method (500) according to Claim 1, comprising a step of providing a recommended value, this being provided if the associated soil temperature value (120) is less than a threshold value (408), wherein the recommended value represents a position to be recommended and/or orientation of a film on the asparagus dam (102).

3. Method (500) according to either of the preceding claims, wherein, in the step (404) of determining, an expected maximum value of the soil temperature is determined as soil temperature value (120).

4. Method (500) according to any of the preceding claims, wherein in the step (504) of determining, an expected soil temperature profile (400) is determined using a plurality of soil temperature values (120) in order to predict the future soil temperature in an asparagus dam (102).

5. Method (500) according to any of the preceding claims, wherein, in the step (502) of reading in, at least one further temperature value captured in the asparagus dam (102) is read in, wherein the temperature value and the further temperature value represent temperatures at different measurement depths in the asparagus dam (102), and, in the step of determining (504), a further expected soil temperature value is determined using the temperature model (304), the further temperature value and the weather information (118).

6. Method (500) according to any of the preceding claims, wherein, in the step (502) of reading in, at least one other temperature value captured in the asparagus dam (102) is read in, wherein the temperature value and the other temperature value represent temperatures at different times in the asparagus dam (102), and, in the step of determining (504), the expected soil temperature value is determined using the temperature model (304), the temperature value, the other temperature value and the weather information (118).

## Revendications

1. Procédé (500) pour influencer une température future du sol dans une butte d'asperges (102), le procédé (500) comprenant les étapes suivantes :
lecture (502) d'au moins une valeur de température (110) détectée dans la butte d'asperges (102) et d'une information de prévision météorologique (118) ; et
détermination (504) d'une valeur de température du sol attendue (120) en utilisant un modèle de température (304) de la butte d'asperges (102), la valeur de température (110) et/ou une évolution dans le temps de la valeur de température (110) et l'information de prévision météorologique (118), afin de prédire la température future du sol dans une butte d'asperges (102), la valeur de température du sol (110), à l'étape (504) de détermination, étant en outre déterminée en utilisant une valeur de position qui représente une orientation de film ou une position du film sur la butte d'asperges (102), une première valeur de température du sol (120) pour un côté de film sombre exposé, notamment noir, une deuxième valeur de température du sol (120) pour un côté de film clair exposé, notamment blanc, et/ou au moins une troisième valeur de température du sol (120) pour une butte d'asperges (102) sans film étant déterminées à l'étape (504) de détermination, et
sélection de l'orientation ou de la position correcte du film afin d'obtenir une température future dans la butte d'asperges dans une plage optimale pour des conditions de croissance optimales lors de la culture d'asperges.

2. Procédé (500) selon la revendication 1, comprenant une étape de fourniture d'une valeur de recommandation, laquelle est fournie lorsque la valeur de température du sol (120) associée est inférieure à une valeur de seuil (408), la valeur de recommandation représentant une position et/ou une orientation à recommander d'un film sur la butte d'asperges (102).

3. Procédé (500) selon l'une des revendications précédentes, une valeur maximale attendue de la température du sol étant déterminée comme valeur de température du sol (120) à l'étape (404) de détermination.

4. Procédé (500) selon l'une des revendications précédentes, une évolution de la température du sol attendue (400) étant déterminée à l'étape (504) de détermination en utilisant une pluralité de valeurs de température du sol (120) afin de prédire la température future du sol dans une butte d'asperges (102).

5. Procédé (500) selon l'une des revendications précédentes, au moins une valeur de température supplémentaire acquise dans la butte d'asperges (102) étant lue à l'étape (502) de lecture, la valeur de température et la valeur de température supplémentaire représentant des températures à différentes profondeurs de mesure dans la butte d'asperges (102), et une valeur de température du sol attendue supplémentaire étant déterminée à l'étape (504) de détermination en utilisant le modèle de température (304), la valeur de température supplémentaire et l'information météorologique (118).

6. Procédé (500) selon l'une des revendications précédentes, au moins une autre valeur de température acquise dans la butte d'asperges (102) étant lue à l'étape (502) de lecture, la valeur de température et l'autre valeur de température représentant des températures à différents instants dans la butte d'asperges (102), et la valeur de température du sol attendue étant déterminée à l'étape (504) de détermination en utilisant le modèle de température (304), la valeur de température, l'autre valeur de température et l'information météorologique (118).
